(19) **Europäisches Patentamt**
**European Patent Office**
**Office européen des brevets**

(11) **EP 3 315 951 B1**

(12) **EUROPEAN PATENT SPECIFICATION**

(45) Date of publication and mention
of the grant of the patent:
**06.08.2025 Bulletin 2025/32**

(51) International Patent Classification (IPC):
**G01N 21/892** *(2006.01)* **G01N 21/952** *(2006.01)*
**G01N 21/88** *(2006.01)* **G01N 21/89** *(2006.01)*

(21) Application number: **16814392.3**

(52) Cooperative Patent Classification (CPC):
**G01N 21/892; G01N 21/8806; G01N 21/952;**
G01N 2021/8816; G01N 2021/8918;
G01N 2021/8924

(22) Date of filing: **22.06.2016**

(86) International application number:
**PCT/JP2016/068516**

(87) International publication number:
**WO 2016/208622 (29.12.2016 Gazette 2016/52)**

(54) **SURFACE DEFECT DETECTION APPARATUS AND SURFACE DEFECT DETECTION METHOD**

VORRICHTUNG ZUR ERKENNUNG VON OBERFLÄCHENDEFEKTEN UND VERFAHREN ZUR
ERKENNUNG VON OBERFLÄCHENDEFEKTEN

APPAREIL DE DÉTECTION D'UN DÉFAUT DE SURFACE ET PROCÉDÉ DE DÉTECTION D'UN
DÉFAUT DE SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2015 JP 2015127626**

(43) Date of publication of application:
**02.05.2018 Bulletin 2018/18**

(73) Proprietor: **JFE Steel Corporation**
**Tokyo 100-0011 (JP)**

(72) Inventors:
• **TATE, Masami**
**Tokyo 100-0011 (JP)**
• **ONO, Hiroaki**
**Tokyo 100-0011 (JP)**

• **OSHIGE, Takahiko**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
EP-A1- 2 693 403     EP-A1- 2 693 403
EP-A1- 3 088 874     WO-A1-2015/098929
JP-A- 2000 241 362   JP-A- 2001 514 386
JP-A- 2006 329 919   JP-A- 2006 329 919
JP-A- 2009 281 742   JP-A- 2010 223 597
JP-A- 2010 223 597   JP-A- 2010 223 621
JP-A- 2010 223 621   JP-A- H04 294 204
JP-A- H04 294 204    US-A- 6 166 393
US-A1- 2008 247 630  US-B1- 6 327 374

**EP 3 315 951 B1**

**Description**

Field

The present invention relates to a surface defect detection apparatus and a surface defect detection method that optically detect surface defects of steel materials.

Background

In recent years, in the manufacturing process of steel products, surface defects of steel materials have been required to be detected in hot processing or cold processing from the viewpoint of improving yields by preventing a large amount of nonconformities. The steel materials mentioned in this section mean steel products including seamless steel pipes, welded steel pipes, steel sheets such as hot-rolled steel sheets, cold-rolled steel sheets, and steel plates, and section shape steel and semifinished products such as slabs produced in the course of manufacture of these steel products. Given these circumstances, developed as a method for detecting surface defects of steel materials is a method that applies light to a billet in the manufacturing process of seamless steel pipes to receive reflected light and determines the presence or absence of a surface defect based on the light amount of the reflected light (refer to Patent Literature 1). Also developed is a method that applies pieces of visible light with a plurality of wavelength regions that do not interact with light emitted from a hot-rolled steel material and that do not interact with each other from oblique directions that are symmetrical with each other with respect to the normal of the surface of the hot-rolled steel material, obtains an image caused by combined reflected light and images caused by the respective pieces of reflected light in the normal direction of the surface of the hot-rolled steel material, and detects a surface defect of the hot-rolled steel material from a combination of these images (refer to Patent Literature 2).

Citation List

Patent Literature

Patent Literature 1: Japanese Laid-open Patent Publication No. 11-37949. Patent Literature 2: Japanese Laid-open Patent Publication No. 59-52735.
In addition to the above, JP H04-294204 A, US 6,166,393 A, and EP 2 088 874 A1 disclose respective teachings for detecting defects with two, three or four light sources. The document JP H04-294204 A discloses an apparatus to detect defects such as cut, break, foreign substance appearing on the surface of an object by one imaging device. An object to be inspected is illuminated by a color illumination system comprising oblique illuminations and a vertical illumination. The object in this state is imaged by a color TV camera. The shape of the object and the defects on the surface of the object are extracted by an image processor.
The document US 6 166 393 A discloses an inspection apparatus for inspecting steel strips by using oblique illuminations and by calculating a difference image.

Summary

Technical Problem

Owing to the fact that the reflectance of scales and harmless patterns is different from the reflectance of a base steel part, the method described in Patent Literature 1 may detect a safe scale and a harmless pattern, which are not surface defects, falsely as a surface defect. Given these circumstances, the method described in Patent Literature 1 distinguishes between the surface defect and the scale using the fact that the shape of surface defects (surface flaws) of billets is linear. However, surface defects of steel materials have various shapes such as a circular shape, not limited to the linear shape. For this reason, it is difficult to use the method described in Patent Literature 1 for processing to detect surface defects of steel materials. Owing to the fact that there are an enormous number of types of surface defects, scales, and harmless patterns, the method described in Patent Literature 2 has difficulty in distinguishing between scales or harmless patterns and surface defects simply by combining the images. In addition, it is realistically difficult to construct a detection logic corresponding to an enormous number of combinations of images.
The present invention has been made in view of the foregoing circumstances, and an object thereof is to provide a surface defect detection apparatus and a surface defect detection method that can distinguish between scales or harmless patterns and surface defects with high precision.

2

Solution to Problem

The mentioned problems are solved by the subject-matter of the independent claims. Further preferred embodiments are defined in the dependent claims.

Advantageous Effects of Invention

The surface defect detection apparatus and the surface defect detection method according to the present invention produce an effect of making it possible to distinguish between scales or harmless patterns and surface defects with high precision.

Brief Description of Drawings

FIG. 1 is a diagram of a configuration example of a surface defect detection apparatus according to an embodiment of the present invention.
FIG. 2 is a diagram of an example of a difference image of an inspection target part generated by difference processing between two two-dimensional images obtained by imaging an inspection target part.
FIG. 3 is a diagram for illustrating a bright-and-dark pattern of a recessed part image contained in a difference image in the embodiment of the present invention.
FIG. 4 is a diagram for illustrating a bright-and-dark pattern of a protruding part image contained in the difference image in the embodiment of the present invention.
FIG. 5 is a flowchart of an example of a surface defect detection method according to an embodiment of the present invention.
FIG. 6 is a diagram for specifically illustrating processing to remove the protruding part image in the embodiment of the present invention.
FIG. 7 is a diagram for illustrating an example of a shape feature amount of a surface defect in the embodiment of the present invention.
FIG. 8 is a diagram for illustrating another example of the shape feature amount of the surface defect in the embodiment of the present invention.
FIG. 9 is a diagram for illustrating circularity as a still another example of the shape feature amount of the surface defect in the embodiment of the present invention.
FIG. 10 is a diagram for illustrating a protruding polygon filling rate as a still another example of the shape feature amount of the surface defect in the embodiment of the present invention.

Description of Embodiments

The following describes preferred embodiments of a surface defect detection apparatus and a surface defect detection method according to the present invention in detail with reference to the accompanying drawings. The present embodiments do not limit the present invention. It should be noted that the drawings are schematic and that the dimensional relation among the components, the ratio among the components, and the like may be different from actual ones. Also among the drawings, some parts that are different in mutual dimensional relation and ratio may be included. In the drawings, the same components are denoted by the same symbols.

(Surface Defect Detection Apparatus)

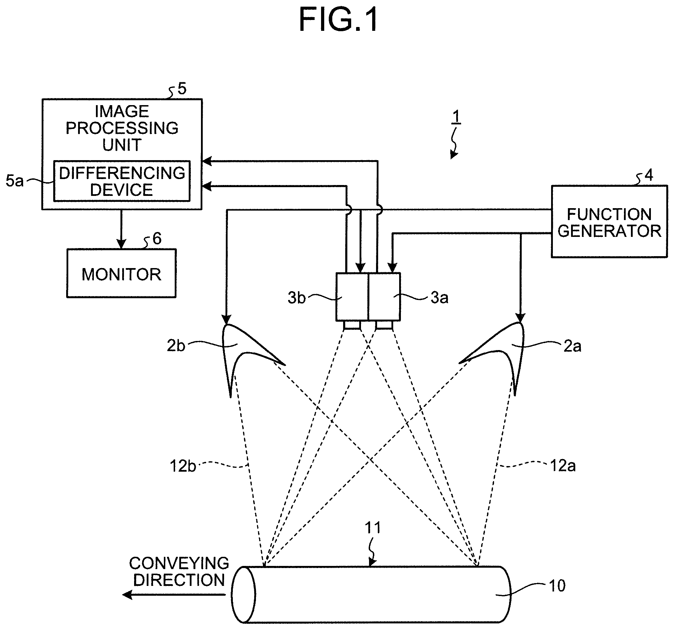

The following first describes a configuration of the surface defect detection apparatus according to an embodiment of the present invention. FIG. 1 is a diagram of a configuration example of the surface defect detection apparatus according to the embodiment of the present invention. As illustrated in FIG. 1, this surface defect detection apparatus 1 according to the embodiment of the present invention is an apparatus for detecting surface defects present on the surface of a cylindrical steel pipe 10 and includes irradiation units 2a and 2b, imaging units 3a and 3b, a function generator 4, an image processing unit 5, and a monitor 6 as main components. The steel pipe 10 is an example of steel materials for which the presence or absence of surface defects is inspected by the apparatus 1 for detecting surface defects and is conveyed in a conveying direction indicated by the arrow in FIG. 1.

The irradiation unit 2a includes a light source or the like that emits illumination light 12a with a predetermined wavelength band and is arranged so as to incline the irradiation direction vector of the illumination light 12a with respect to the normal vector of the surface (specifically, an inspection target part 11) of the steel pipe 10. The irradiation unit 2a applies the illumination light 12a to the inspection target part 11 from a direction inclined with respect to the inspection target part 11 of the surface of the steel pipe 10 at the timing instructed by a trigger signal from the function generator 4. With this application, the irradiation unit 2a illuminates the inspection target part 11 from the inclined direction for a predetermined period from this timing.

The irradiation unit 2b includes a light source or the like that emits illumination light 12b with a wavelength band distinguishable from the illumination light 12a of the irradiation unit 2a. The irradiation unit 2b is arranged so as to incline the irradiation direction vector of the illumination light 12b opposite to the irradiation unit 2a with respect to the normal vector of the inspection target part 11 of the steel pipe 10. The irradiation unit 2b applies the illumination light 12b to the inspection target part 11 with substantially the same incident angle as that of the irradiation unit 2a from a direction inclined opposite to the irradiation unit 2a with respect to the inspection target part 11 of the steel pipe 10 at the timing instructed by a trigger signal from the function generator 4. With this application, the irradiation unit 2b illuminates the same inspection target part 11 as the irradiation unit 2a from the inclined direction for a predetermined period from this timing.

In the present embodiment, the irradiation units 2a and 2b are desirably arranged symmetrically with respect to the inspection target part 11 of the steel pipe 10. For this purpose, the irradiation units 2a and 2b are displaced by the same incident angle with respect to the normal vector of the inspection target part 11 and are arranged such that the respective irradiation direction vectors of the pieces of illumination light 12a and 12b and the normal vector of the inspection target part 11 are on the same plane.

The aim of making the incident angles of the pieces of illumination light 12a and 12b with respect to the inspection target part 11 the same is to make optical conditions as much the same as possible when the light sources with different incident directions are distinguished from each other to significantly reduce a signal of a safe part including the harmless pattern of the inspection target part 11 by difference processing described below. However, the signal of the safe part heavily depends on the surface properties of the inspection target part 11, and it is generally difficult to ensure the sameness of the signal of the safe part by the same incident angle. Consequently, the incident angles will be represented as being the same incident angle so long as the signal of the safe part can be reduced by the difference processing described below even when the incident angles are somewhat different from each other if the difference is within the range of 25 to 55 degrees.

In the present embodiment, the irradiation unit 2a and the irradiation unit 2b are distinguishable from each other. In other words, the respective light sources of the irradiation unit 2a and the irradiation unit 2b are distinguishable from each other. The distinguishable light sources mentioned in this section mean light sources for which reflective light amounts can be determined for the respective light sources for reflected light obtained from the inspection target part 11.

The imaging units 3a and 3b each include an area sensor and an optical system and are arranged on the normal vector of the inspection target part 11 as much extent as possible with respective imaging fields of view containing the inspection target part 11 of the steel pipe 10 ensured. In the present embodiment, the imaging unit 3a receives the reflected light of the illumination light 12a from the inspection target part 11 at the timing instructed by a trigger signal from the function generator 4. Consequently, the imaging unit 3a captures a two-dimensional image of the inspection target part 11 illuminated with the illumination light 12a of the irradiation unit 2a. The imaging unit 3b receives the reflected light of the illumination light 12b from the inspection target part 11 at the timing instructed by a trigger signal from the function generator 4. Consequently, the imaging unit 3b captures a two-dimensional image of the inspection target part 11 illuminated with the illumination light 12b of the irradiation unit 2b. Each time the two-dimensional image of the inspection target part 11 is captured, the imaging units 3a and 3b each successively input data on the captured two-dimensional image to the image processing unit 5.

The function generator 4 controls the respective pieces of operation timing of the irradiation units 2a and 2b and the imaging units 3a and 3b. Specifically, in the present embodiment, the function generator 4 controls the irradiation timing of each of illumination light 12a and 12b of the irradiation units 2a and 2b through input of the trigger signals to the irradiation units 2a and 2b. The function generator 4 controls the timing when the imaging unit 3a receives the reflected light of the illumination light 12a from the inspection target part 11 through input of the trigger signal to the imaging unit 3a. With this control, the function generator 4 controls the timing when the imaging unit 3a captures the two-dimensional image of the inspection target part 11 illuminated with the illumination light 12a. The function generator 4 controls the timing when the imaging unit 3b receives the reflected light of the illumination light 12b from the inspection target part 11 through input of the trigger signal to the imaging unit 3b. With this control, the function generator 4 controls a time when the imaging unit 3b captures the two-dimensional image of the inspection target part 11 illuminated with the illumination light 12b.

The image processing unit 5 is an apparatus that performs the difference processing described below and the like between the two two-dimensional images input from the imaging units 3a and 3b to detect surface defects in the inspection target part 11 of the steel pipe 10.

Specifically, in the present embodiment, the image processing unit 5 performs image processing such as calibration, shading correction, or noise removal using camera parameters derived in advance on the two two-dimensional images input from the imaging units 3a and 3b. As illustrated in FIG. 1, the image processing unit 5 has a differencing device 5a. The image processing unit 5 performs the difference processing between the two two-dimensional images after being subjected to the image processing by the differencing device 5a. With this processing, the image processing unit 5 generates a difference image between the two-dimensional image by the imaging unit 3a and the two-dimensional image by the imaging unit 3b, that is, a difference image of the inspection target part 11. The image processing unit 5 removes an image of a harmless pattern as the safe part in the inspection target part 11 by this difference processing. Furthermore, the image processing unit 5 removes an image of a scale as the safe part in the inspection target part 11 from the generated difference image. The image processing unit 5 detects the surface defect present in the inspection target part 11 from the difference image after the images of the harmless pattern and the scale have been thus removed.

The monitor 6 functions as a display unit for displaying detection results of surface defects for the steel pipe 10. Specifically, the monitor 6 receives input of detection results of surface defects for the inspection target part 11 from the image processing unit 5 and displays the input detection results each time they are input. Examples of the detection results of surface defects displayed on the monitor 6 include information on detection of surface defects of the steel pipe 10 such as information indicating a determination result of the presence or absence of surface defects for the inspection target part 11, a difference image representing the detected surface defect of the inspection target part 11, and the respective two-dimensional images of the inspection target part 11 captured by the imaging units 3a and 3b.

In the present embodiment, the scale and the harmless pattern mean parts with a thickness of about a few to a few tens of micrometers having surface film or surface properties different from a base steel part in optical characteristics. The scale and the harmless pattern are parts causing noise in processing to detect surface defects for the inspection target part 11.

(Difference Image of Inspection Target Part)

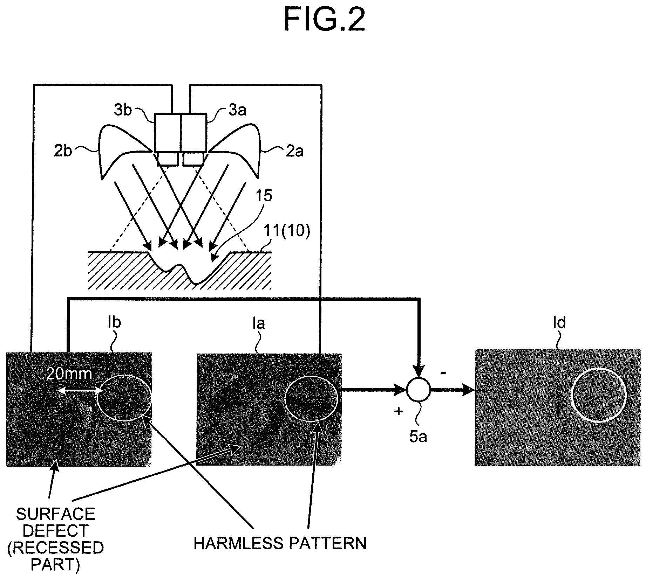

The following describes the difference image of the inspection target part 11 of the steel pipe 10 as an object of inspection for surface defects in the present embodiment of the present invention. FIG. 2 is a diagram of an example of the difference image of the inspection target part generated by the difference processing between two two-dimensional images obtained by capturing the inspection target part. In FIG. 2, the two-dimensional image Ia is a two-dimensional image of the inspection target part 11 captured by the imaging unit 3a when the irradiation unit 2a illuminates the inspection target part 11 from the direction inclined with respect to the surface of the steel pipe 10. The two-dimensional image Ib is a two-dimensional image of the inspection target part 11 captured by the imaging unit 3b when the irradiation unit 2b illuminates the inspection target part 11 from the direction inclined opposite to the irradiation unit 2a with respect to the surface of the steel pipe 10. In the two two-dimensional images Ia and Ib, the same recessed part 15 of the inspection target part 11 is drawn as the surface defect such as a flaw with depth, and the harmless pattern, which is not the surface defect, is drawn as part of the safe part.

As illustrated in FIG. 2, the differencing device 5a performs the difference processing between the two two-dimensional images Ia and Ib by the imaging units 3a and 3b and thereby generates a difference image Id of the inspection target part 11. Specifically, in the present embodiment, the luminance value of each pixel forming the two-dimensional image Ia by the imaging unit 3a is defined as Ia $(x, y)$, whereas the luminance value of each pixel forming the two-dimensional image Ib by the imaging unit 3b is defined as Ib $(x, y)$. The two-dimensional images Ia and Ib are each an image having a pixel number of $X \times Y$. In an orthogonal two-axis xy coordinate system set for each of the two-dimensional images Ia and Ib, the x coordinate is defined as $1 \leq x \leq X$, whereas the y coordinate is defined as $1 \leq y \leq Y$. Under this definition, with the two-dimensional image Ia by the imaging unit 3a as an addition image and with the two-dimensional image Ib by the imaging unit 3b as a subtraction image, the differencing device 5a performs difference processing to subtract the subtraction image from the addition image and thereby generates the difference image Id of the inspection target part 11.

The luminance value Id $(x, y)$ of each pixel of the difference image Id obtained by the difference processing is represented by the following Formula (1) using the luminance value Ia $(x, y)$ of each pixel of the two-dimensional image Ia as the addition image and the luminance value Ib $(x, y)$ of each pixel of the two-dimensional image Ib as the subtraction image:

$$\mathrm{Id}\ (x,\ y)\ =\ \mathrm{Ia}\ (x,\ y)\ -\ \mathrm{Ib}\ (x,\ y)\ \dots\ (1)$$

…

In the safe part of the inspection target part 11, regardless of the presence or absence of the harmless pattern, the angle between the normal vector of the surface of the steel material and the irradiation direction vector of one irradiation unit 2a equals the angle between the normal vector of the surface of the steel material and the irradiation direction vector of the other irradiation unit 2b. Consequently, between the images of the safe part of the two-dimensional images Ia and Ib, the luminance value Ia $(x, y)$ = the luminance value Ib $(x, y)$ regardless of the presence or absence of the harmless pattern. In other words, in the image of the safe part of the difference image Id, the luminance value Id $(x, y)$ = 0. Consequently, as illustrated in FIG. 2, the difference image Id is an image with the harmless pattern drawn in the two-dimensional images Ia and Ib removed. Consequently, the differencing device 5a generates the difference image Id of the two two-dimensional images Ia and Ib and thereby enables the image of the safe harmless pattern, which is not the surface defect, to be removed.

As exemplified in the recessed part 15 illustrated in FIG. 2, a surface defect part of the inspection target part 11 has a shape recessed with depth from the surface of the steel pipe 10 and undulation. Such a surface defect part, therefore, inevitably includes a place at which the angle between the normal vector of the surface of the steel material and the irradiation direction vector of the one irradiation unit 2a does not equal the angle between the normal vector of the surface of the steel material and the irradiation direction vector of the other irradiation unit 2b. Consequently, between the images of the surface defect part of the two-dimensional images Ia and Ib, the luminance value Ia (x, y) ≠ the luminance value Ib (x, y). In other words, in the image of the surface defect part of the difference image Id, the Id (x, y) ≠ 0. Consequently, unlike the image of the harmless pattern, which has a luminance value of Id (x, y) = 0 to be removed as described above, the image of the surface defect part remains in the difference image Id while being optically detectable as illustrated in FIG. 2.

(Bright-and-Dark Pattern of Recessed Part Image)

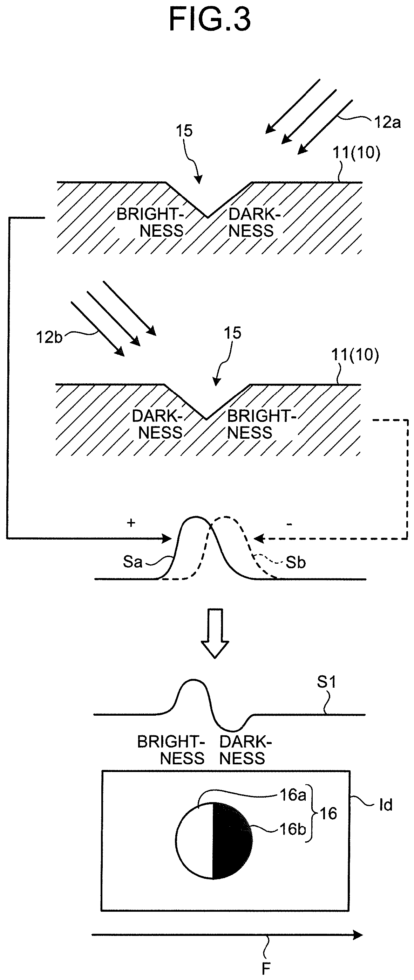

The following describes a bright-and-dark pattern of a recessed part image contained in the difference image Id of the inspection target part 11 of the steel pipe 10. FIG. 3 is a diagram for illustrating the bright-and-dark pattern of the recessed part image contained in the difference image in the embodiment of the present invention. In the embodiment of the present invention, as illustrated in FIG. 3, when the recessed part 15 is present in the inspection target part 11 of the steel pipe 10, the difference image Id of this inspection target part 11 contains a recessed part image 16 as a difference image representing this recessed part 15.

Specifically, as illustrated in FIG. 3, when the illumination light 12a from the irradiation unit 2a (refer to FIG. 1) is applied to the recessed part 15 present in the inspection target part 11 of the steel pipe 10, the side close to the irradiation unit 2a of the recessed part 15 is dark owing to a reduction in the light amount of the illumination light 12a per unit area. The side far from the irradiation unit 2a of the recessed part 15 is close to the regular reflection direction of the illumination light 12a and is thereby bright.

When the illumination light 12b from the irradiation unit 2b (refer to FIG. 1) inclined opposite to the irradiation unit 2a is applied to the recessed part 15, as illustrated in FIG. 3, the side close to the irradiation unit 2b of the recessed part 15 is dark owing to a reduction in the light amount of the illumination light 12b per unit area. The side far from the irradiation unit 2b of the recessed part 15 is close to the regular reflection direction of the illumination light 12b and is thereby bright.

In other words, the bright and dark parts of the recessed part 15 are reversed between the case when the illumination light 12a is applied to the recessed part 15 from an obliquely upper part with respect to the inspection target part 11 (the upper right part in FIG. 3) and the case when the illumination light 12b is applied to the recessed part 15 from an obliquely upper part opposite to the illumination light 12a (the upper left part in FIG. 3). Consequently, as illustrated in FIG. 3, the peak of an image signal Sa based on the reflected light from the recessed part 15 when the illumination light 12a is applied and the peak of an image signal Sb based on the reflected light from the recessed part 15 when the illumination light 12b is applied deviate from each other in accordance with the fact that the bright and dark parts are reversed. The image signal Sb (the image signal of the recessed part 15 by the imaging unit 3b) is subtracted from the image signal Sa (the image signal of the recessed part 15 by the imaging unit 3a), whereby an image signal S1 of the recessed part image 16 is generated as illustrated in FIG. 3.

The recessed part image 16 is an image representing the recessed part 15 of the difference image Id and is formed by a combination of a bright part 16a and a dark part 16b as illustrated in FIG. 3. The arrangement of the bright part 16a and the dark part 16b in this recessed part image 16 corresponds to the positive and negative peaks of the image signal S1. Specifically, as illustrated in FIG. 3, the bright part 16a and the dark part 16b forming the recessed part image 16 are arranged in order of brightness and darkness in a predetermined detection direction F.

The detection direction F is a predetermined direction of the difference image Id corresponding to either irradiation direction of the irradiation units 2a and 2b illustrated in FIG. 1. Specifically, in the present embodiment, the detection direction F is the same as the direction of a vector obtained by orthogonally projecting the irradiation direction vector of the irradiation unit 2b for use in the capturing of the two-dimensional image Ib as the subtraction image onto the inspection target part 11.

The recessed part 15 is a part having a recessed shape in the inspection target part 11 of the steel pipe 10. In the present embodiment, the recessed part 15 is determined to be the surface defect such as a surface flaw in the inspection target part 11. The recessed part 15 includes a recessed part having undulation (unevenness) within a recess as illustrated in FIG. 2 not to mention a recessed part having an acute angle section illustrated in FIG. 3 or a curved section (not illustrated). The recessed part 15 includes ones having various outer shapes such as a linear shape, a circular shape, and a polygonal shape.

(Bright-and-Dark Pattern of Protruding part Image)

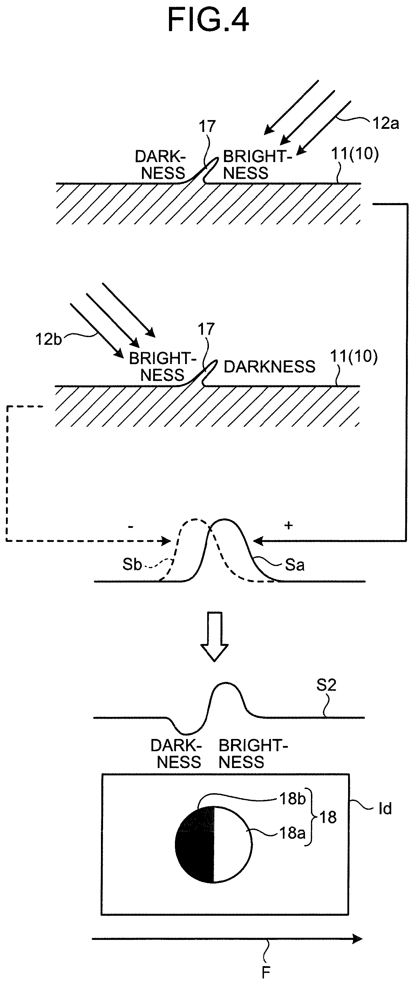

The following describes a bright-and-dark pattern of a protruding part image contained in the difference image Id of the inspection target part 11 of the steel pipe 10. FIG. 4 is a diagram for illustrating the bright-and-dark pattern of the protruding part image contained in the difference image in the embodiment of the present invention. In the embodiment of the present invention, as illustrated in FIG. 4, when a protruding part 17 is present in the inspection target part 11 of the steel pipe 10, the difference image Id of this inspection target part 11 contains a protruding part image 18 as a difference image representing this protruding part 17.

Specifically, as illustrated in FIG. 4, when the illumination light 12a from the irradiation unit 2a (refer to FIG. 1) is applied to the protruding part 17 present in the inspection target part 11 of the steel pipe 10, the side close to the irradiation unit 2a of the protruding part 17 is close to the regular reflection direction of the illumination light 12a and is thereby bright. The side far from the irradiation unit 2a of the protruding part 17 is shaded by the protruding part 17 and is thereby dark.

When the illumination light 12b from the irradiation unit 2b (refer to FIG. 1) inclined opposite to the irradiation unit 2a is applied to the protruding part 17, as illustrated in FIG. 4, the side close to the irradiation unit 2b of the protruding part 17 is close to the regular reflection direction of the illumination light 12b and is thereby bright. The side far from the irradiation unit 2b of the protruding part 17 is shaded by the protruding part 17 and is thereby dark.

In other words, the bright and dark parts of the protruding part 17 are reversed between the case when the illumination light 12a is applied to the protruding part 17 from an obliquely upper part with respect to the inspection target part 11 (the upper right part in FIG. 4) and the case when the illumination light 12b is applied to the protruding part 17 from an obliquely upper part opposite to the illumination light 12a (the upper left part in FIG. 4). Consequently, as illustrated in FIG. 4, the peak of the image signal Sa based on the reflected light from the protruding part 17 when the illumination light 12a is applied and the peak of the image signal Sb based on the reflected light from the protruding part 17 when the illumination light 12b is applied deviate from each other in accordance with the fact that the bright and dark parts are reversed. The image signal Sb (the image signal of the protruding part 17 by the imaging unit 3b) is subtracted from the image signal Sa (the image signal of the protruding part 17 by the imaging unit 3a), whereby an image signal S2 of the protruding part image 18 is generated as illustrated in FIG. 4.

The protruding part image 18 is an image representing the protruding part 17 of the difference image Id and is formed by a combination of a bright part 18a and a dark part 18b as illustrated in FIG. 4. The arrangement of the bright part 18a and the dark part 18b in this protruding part image 18 corresponds to the positive and negative peaks of the image signal S2. Specifically, as illustrated in FIG. 4, the bright part 18a and the dark part 18b forming the protruding part image 18 are arranged in order of darkness and brightness in the predetermined detection direction F.

The protruding part 17 is a part having a protruding shape in the inspection target part 11 of the steel pipe 10. Specifically, in the present embodiment, the protruding part 17 is the safe scale, which is not the surface defect. The outer shape of the protruding part 17 is not limited to the mode illustrated in FIG. 4; in other words, the protruding part 17 includes ones having various outer shapes such as a linear shape, a circular shape, and a polygonal shape.

(Surface Defect Detection Method)

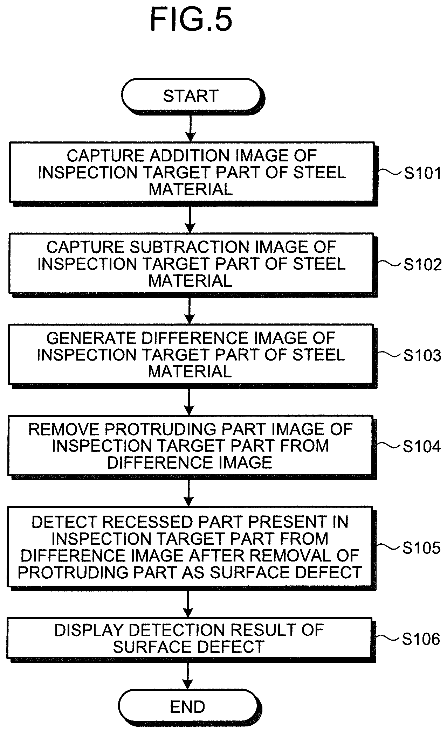

The following describes the surface defect detection method according to the embodiment of the present invention. FIG. 5 is a flowchart of an example of the surface defect detection method according to the embodiment of the present invention. In the surface defect detection method according to the embodiment of the present invention, pieces of processing at Steps S101 to S106 illustrated in FIG. 5 are performed using the apparatus 1 for detecting surface defects (refer to FIG. 1).

Specifically, in the surface defect detection method according to the embodiment of the present invention, as illustrated in FIG. 5, the apparatus 1 for detecting surface defects first captures an addition image of an inspection target part of a steel material (Step S101).

At Step S101, the irradiation unit 2a, which is one of the irradiation units 2a and 2b, applies the illumination light 12a to the inspection target part 11 from the direction inclined with respect to the inspection target part 11 of the steel pipe 10 in accordance with the trigger signal from the function generator 4. The irradiation unit 2a illuminates the inspection target part 11 with this illumination light 12a. Next, the imaging unit 3a, which is one of the imaging units 3a and 3b, captures the two-dimensional image Ia of the inspection target part 11 illuminated with the illumination light 12a of the irradiation unit 2a in accordance with the trigger signal from the function generator 4. This two-dimensional image Ia is an addition image in difference processing at Step S103 described below. The imaging unit 3a transmits data on the captured two-dimensional image Ia of the inspection target part 11 (an image signal based on the reflected light of the illumination light 12a from the inspection target part 11) to the image processing unit 5.

After executing Step S101, the apparatus 1 for detecting surface defects captures a subtraction image of the inspection target part of the steel material by the irradiation unit 2b distinguishable from the irradiation unit 2a and the imaging unit 3b (Step S102).

At Step S102, the irradiation unit 2b, which is the other of the irradiation units 2a and 2b, applies the illumination light 12b to the same inspection target part 11 as that at Step S101, in accordance with the trigger signal from the function generator 4. In this process, the irradiation unit 2b applies the illumination light 12b to the inspection target part 11 with substantially the same incident angle as that of the irradiation unit 2a from the direction inclined opposite to the irradiation unit 2a with respect to the inspection target part 11. The irradiation unit 2b illuminates the inspection target part 11 with this illumination light 12b. Next, the imaging unit 3b, which is the other of the imaging units 3a and 3b, captures the two-dimensional image Ib of the inspection target part 11 illuminated with the illumination light 12b of the irradiation unit 2b in accordance with the trigger signal from the function generator 4. This two-dimensional image Ib is a subtraction image in the difference processing at Step S103 described below. The imaging unit 3b transmits data on the captured two-dimensional image Ib of the inspection target part 11 (an image signal based on the reflected light of the illumination light 12b from the inspection target part 11) to the image processing unit 5.

After executing Step S102, the apparatus 1 for detecting surface defects generates the difference image Id of the two-dimensional image Ia of the inspection target part 11 captured at Step S101 and the two-dimensional image Ib of the inspection target part 11 captured at Step S102 (Step S103).

At Step S103, the image processing unit 5 performs the difference processing between the two-dimensional image Ia of the inspection target part 11 acquired from the one imaging unit 3a and the two-dimensional image Ib of the inspection target part 11 acquired from the other imaging unit 3b. In this difference processing, the differencing device 5a subtracts the two-dimensional image Ib as the subtraction image from the two-dimensional image Ia as the addition image, thereby generating the difference image Id of the two two-dimensional images Ia and Ib. In this process, the differencing device 5a calculates the luminance value Id (x, y) of each pixel of the difference image Id based on Formula (1).

The differencing device 5a sets the luminance value of each pixel forming the image of the harmless pattern of the inspection target part 11 contained in each of the two-dimensional images Ia and Ib to zero (that is, Id (x, y) = 0) by the difference processing. The differencing device 5a thereby removes the image of the harmless pattern from image data used when the scale and the surface defect of the inspection target part 11 are detected.

After executing Step S103, the apparatus 1 for detecting surface defects removes the image of the protruding part 17 of the inspection target part 11 from the difference image Id generated at Step S103 (Step S104).

At Step S104, the image processing unit 5 extracts bright parts and dark parts of the difference image Id and recognizes the arrangement of the extracted bright parts and dark parts in the predetermined detection direction F set in the difference image Id. In this process, as described above, the detection direction F is a predetermined direction of the difference image Id corresponding to the irradiation direction of the illumination light of the irradiation unit 2a or the irradiation unit 2b. Specifically, in the present embodiment, the detection direction F is the same as the direction of the vector obtained by orthogonally projecting the irradiation direction vector of the irradiation unit 2b for use in the capturing of the two-dimensional image Ib as the subtraction image onto the inspection target part 11. The image processing unit 5 removes a combination of a bright part and a dark part of the protruding part 17 in the inspection target part 11 from among the bright parts and the dark parts of the difference image Id based on the arrangement of the bright parts and the dark parts in the detection direction F. With this removal, the image processing unit 5 removes the image of the protruding part 17 formed by the combination of the bright part and the dark part from the difference image Id.

Specifically, at Step S104, the image processing unit 5 binarizes the difference image Id of the inspection target part 11 with a predetermined luminance threshold, performs removal of coupling points and isolated points as needed, and then performs labeling processing on the bright parts and the dark parts of this difference image Id. Next, the image processing unit 5 extracts a bright part and a dark part each having an area equal to or more than a predetermined threshold out of the bright parts and the dark parts of the difference image Id subjected to the labeling processing. The image processing unit 5 then calculates a separating distance between the bright part and the dark part, the degree of similarity in shapes between the bright part and the dark part, and the degree of similarity in areas between the bright part and the dark part for the extracted bright part and dark part. For the degree of similarity in shapes in particular, the image processing unit 5 calculates a shape feature amount as an indicator of the shape of the bright part and the dark part of the protruding part 17 and calculates the degree of similarity in shapes between the bright part and the dark part based on this shape feature amount. Examples of the shape feature amount related to the protruding part 17 include one similar to a shape feature amount in processing to detect the surface defect (the recessed part 15) described below.

Subsequently, the image processing unit 5 determines whether the arrangement of the bright parts and the dark parts of the difference image Id in the detection direction F is a specific arrangement of the bright parts and the dark parts of the protruding part 17 based on the separating distance, the degree of similarity in shapes, and the degree of similarity in areas between the bright part and the dark part of the difference image Id. The specific arrangement mentioned in this section means an image arrangement of the bright parts and the dark parts arranged in order of darkness and brightness in the detection direction F as exemplified in the bright part 18a and the dark part 18b of the protruding part image 18 illustrated in FIG. 4. The image processing unit 5 removes a combination of the bright part and the dark part of the difference image Id that has been determined to be the specific arrangement among the bright parts and dark parts each extracted from the difference image Id as described above as the combination of the bright part and the dark part of the protruding part 17.

The difference image Id of the inspection target part 11 may contain a plurality of combinations of the bright part and the dark part of the protruding part 17 in a row in the detection direction F, not limited to one combination. In this case, the image processing unit 5 executes the determination processing for the specific arrangement on the combinations of the bright part and the dark part each extracted from the difference image Id successively and repeatedly in the detection direction F of the difference image Id. With this processing, the image processing unit 5 successively removes the combinations of the bright part and the dark part of the difference image Id that have been determined to be the specific arrangement, that is, the combinations of the bright part and the dark part of the protruding part 17 in order of the detection direction F of the difference image Id.

The image processing unit 5 thus removes the image of the protruding part 17, that is, the image of the safe scale, which is not the surface defect, from the difference image Id for use in the processing to detect surface defects (including the binarized difference image Id).

After executing Step S104, the apparatus 1 for detecting surface defects detects the recessed part 15 present in the inspection target part 11 from the difference image Id after the removal of the protruding part at Step S104 as the surface defect (Step S105).

At Step S105, the image processing unit 5 determines the presence or absence of the recessed part 15 in the inspection target part 11 based on the remainder of the bright parts and the dark parts contained as images in the difference image Id after Step S104 (removing the image of the protruding part 17). In this process, the image processing unit 5 calculates the shape feature amount of the remainder of the bright parts and the dark parts after removing the bright part and the dark part of the protruding part 17 among the bright parts and the dark parts each extracted from the difference image Id to which the binarization processing and the labeling processing have been subjected at Step S104. The shape feature amount mentioned in this section is a feature amount as an indicator of the slenderness of the bright parts and the dark parts remaining in the difference image Id and is determined in accordance with the outer shape of the recessed part 15 as the surface defect. In other words, the shape feature amount at this Step S105 is an indicator of the slenderness of the surface defect. The image processing unit 5 determines the presence or absence of the recessed part 15 based on the calculated shape feature amount or the arrangement of the remainder of the bright parts and the dark parts in the detection direction F.

In this determination processing, upon determining that the recessed part 15 is present, the image processing unit 5 detects the recessed part 15 that has been determined to be present as a surface defect of the steel pipe 10. In this process, the image processing unit 5 detects the combination of the bright part and the dark part forming the image of the recessed part 15 among the remainder of the bright parts and the dark parts as the surface defect. In contrast, upon determining that the recessed part 15 is absent, the image processing unit 5 obtains the detection result that the current inspection target part 11 has no surface defect of the steel pipe 10.

After executing Step S105, the apparatus 1 for detecting surface defects displays the detection result of the surface defect at Step S105 (Step S106) to end the present processing. At Step S106, the monitor 6 acquires the detection result of the surface defect of the current inspection target part 11 in the steel pipe 10 from the image processing unit 5 and displays the acquired detection result of the surface defect. In this process, the monitor 6 displays information by which whether the surface defect is present on the steel pipe 10 can be visually recognized such as the determination result of the presence or absence of the surface defect and the difference image Id representing the detected surface defect. Subsequently, the apparatus 1 for detecting surface defects repeatedly executes the pieces of processing at Steps S101 to S106 illustrated in FIG. 5 each time the inspection target part 11 is changed.

(Processing to Remove Protruding Part Image)

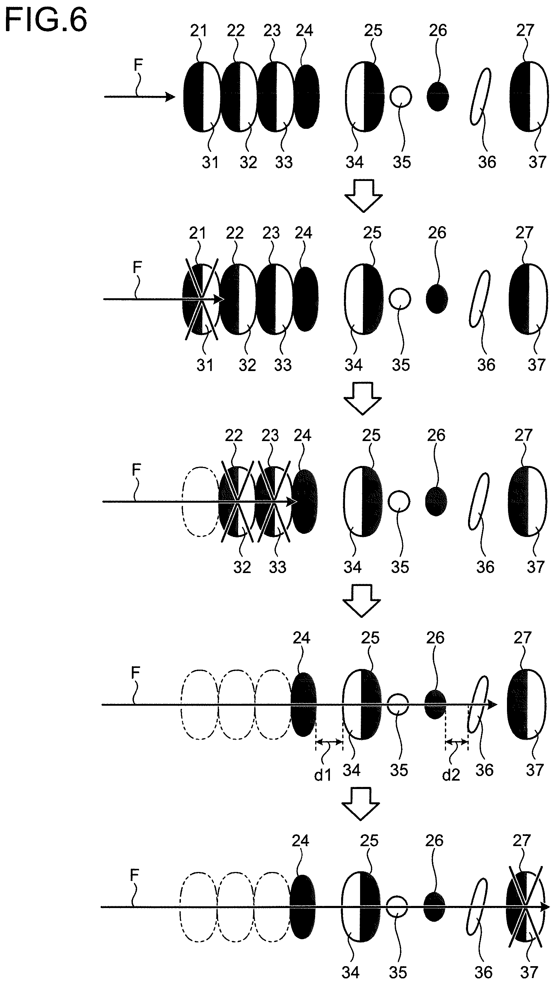

The following specifically describes the processing to remove the image of the protruding part 17 from the difference image Id of the inspection target part 11 at Step S104 (refer to FIG. 5), that is, processing to remove the protruding part image. FIG. 6 is a diagram for specifically illustrating the processing to remove the protruding part image in the embodiment of the present invention. The specific example illustrated in FIG. 6 describes a case in which the processing to remove the protruding part image at Step S104 is performed on the bright and dark images each extracted from the difference image Id of the inspection target part 11, that is, a bright parts 31 to 37 and a dark parts 21 to 27.

As illustrated in FIG. 6, the bright parts 31 to 37 and the dark parts 21 to 27 are arranged alternately in order of darkness and brightness in the predetermined detection direction F. The image processing unit 5 (refer to FIG. 1) successively detects a bright part and a dark part arranged in order of darkness and brightness in the detection direction F among the bright parts 31 to 37 and the dark parts 21 to 27 at Step S104. In other words, the image processing unit 5 first focuses attention on the dark part 21, which is on the closest side in the detection direction F (the left side in FIG. 6) and the bright part 31 next thereto. The image processing unit 5 then determines whether the dark part 21 and the bright part 31 on which attention has been focused form the image of the protruding part 17 as the scale.

In this process, the image processing unit 5 calculates the separating distance, the shape feature amounts, and the areas of the dark part 21 and the bright part 31 in the difference image Id. The image processing unit 5 then calculates the degree of similarity in shapes between the dark part 21 and the bright part 31 based on the obtained respective shape feature amounts and calculates the degree of similarity in areas between the dark part 21 and the bright part 31 based on the obtained respective areas. Subsequently, the image processing unit 5 compares the separating distance, the degree of similarity in shapes, and the degree of similarity in areas that have been calculated with respective thresholds set in advance. As a result of this comparison processing, the separating distance between the dark part 21 and the bright part 31 is equal to or less than the threshold, and both the degree of similarity in shapes and the degree of similarity in areas between the dark part 21 and the bright part 31 are equal to or more than the respective thresholds; the image processing unit 5 therefore determines that the arrangement of the dark part 21 and the bright part 31 in the detection direction F is the specific arrangement corresponding to the protruding part 17 (refer to FIG. 4). The image processing unit 5 determines that the combination of the dark part 21 and the bright part 31 thus determined to be the specific arrangement form the image of the protruding part 17.

Based on the result of the determination processing on the dark part 21 and the bright part 31, the image processing unit 5 removes the combination of the dark part 21 and the bright part 31 arranged with the specific arrangement in the detection direction F from the difference image Id for the reason that the combination forms the image of the protruding part 17.

Subsequently, the image processing unit 5 focuses attention on the dark part 22 next to the bright part 31 before being removed in the detection direction F and the bright part 32 next thereto. The image processing unit 5 then performs determination processing similar to the case of the dark part 21 and the bright part 31 on the dark part 22 and the bright part 32 on which attention has been focused. Consequently, the image processing unit 5 determines that the arrangement of the dark part 22 and the bright part 32 in the detection direction F is the specific arrangement corresponding to the protruding part 17 and removes the combination of the dark part 22 and the bright part 32 arranged with the specific arrangement from the difference image Id for the reason that the combination forms the image of the protruding part 17. Subsequently, the image processing unit 5 performs determination processing similar to the case of the dark part 21 and the bright part 31 on the dark part 23 next to the bright part 32 before being removed in the detection direction F and the bright part 33 next thereto. Consequently, the image processing unit 5 determines that the arrangement of the dark part 23 and the bright part 33 is the specific arrangement corresponding to the protruding part 17 and removes the combination of the dark part 23 and the bright part 33 arranged with the specific arrangement from the difference image Id for the reason that the combination forms the image of the protruding part 17.

Next, the image processing unit 5 focuses attention on the dark part 24 next to the bright part 33 before being removed in the detection direction F and the bright part 34 next thereto. The image processing unit 5 then performs determination processing similar to the case of the dark part 21 and the bright part 31 on the dark part 24 and the bright part 34 on which attention has been focused.

As illustrated in FIG. 6, while the dark part 24 and the bright part 34 are arranged in order of darkness and brightness in the detection direction F, they are spaced apart from each other with a separating distance d1. This separating distance d1 is a distance exceeding the set threshold. Consequently, the image processing unit 5 determines that the arrangement of the dark part 24 and the bright part 34 in the detection direction F, which does not satisfy the condition that the separating distance is equal to or less than the threshold, is not the specific arrangement corresponding to the protruding part 17. Based on this determination result, the image processing unit 5 determines that the combination of the dark part 24 and the bright part 34 does not form the image of the protruding part 17 and therefore does not remove the dark part 24 and the bright part 34 from the difference image Id and leaves them.

Subsequently, the image processing unit 5 focuses attention on the dark part 25 next to the bright part 34 that has not been removed to be left as described above in the detection direction F and the bright part 35 next thereto. The image processing unit 5 then performs determination processing similar to the case of the dark part 21 and the bright part 31 on the dark part 25 and the bright part 35 on which attention has been focused.

As illustrated in FIG. 6, while the dark part 25 and the bright part 35 are arranged in order of darkness and brightness in the detection direction F, they have shapes (outer shapes) and areas that are markedly different from each other. In other words, both the degrees of similarity in shape and area between the dark part 25 and the bright part 35 are less than the set thresholds. Consequently, the image processing unit 5 determines that the arrangement of the dark part 25 and the bright part 35 in the detection direction F, which does not satisfy the condition that both the degrees of similarity in shape and area are equal to or more than the thresholds, is not the specific arrangement corresponding to the protruding part 17. Based on this determination result, the image processing unit 5 determines that the combination of the dark part 25 and the bright part 35 does not form the image of the protruding part 17 and therefore does not remove the dark part 25 and the bright part 35 from the difference image Id and leaves them.

Next, the image processing unit 5 focuses attention on the dark part 26 next to the bright part 35 that has not been removed to be left as described above in the detection direction F and the bright part 36 next thereto. The image processing unit 5 then performs determination processing similar to the case of the dark part 21 and the bright part 31 on the dark part 26 and the bright part 36 on which attention has been focused.

As illustrated in FIG. 6, while the dark part 26 and the bright part 36 are arranged in order of darkness and brightness in the detection direction F, they are spaced apart from each other with a separating distance d2 and have shapes that are markedly different from each other. In other words, in the dark part 26 and the bright part 36, the separating distance d2 is a distance exceeding the set threshold, and the degree of similarity in shapes is less than the set threshold. Consequently, the image processing unit 5 determines that the arrangement of the dark part 26 and the bright part 36 in the detection direction F, which does not satisfy neither the condition that the separating distance is equal to or less than the threshold nor the condition that the degree of similarity in shapes is equal to or more than the threshold, is not the specific arrangement corresponding to the protruding part 17. Based on this determination result, the image processing unit 5 determines that the combination of the dark part 26 and the bright part 36 does not form the image of the protruding part 17 and therefore does not remove the dark part 26 and the bright part 36 from the difference image Id and leaves them.

Subsequently, the image processing unit 5 focuses attention on the dark part 27 next to the bright part 36 that has not been removed to be left as described above in the detection direction F and the bright part 37 next thereto. The image processing unit 5 then performs determination processing similar to the case of the dark part 21 and the bright part 31 on the dark part 27 and the bright part 37 on which attention has been focused.

The dark part 27 and the bright part 37 illustrated in FIG. 6 satisfy the condition that the separating distance is equal to or less than the threshold and the condition that both the degrees of similarity in shape and area are equal to or more than the thresholds. Consequently, the image processing unit 5 determines that the arrangement of the dark part 27 and the bright part 37 in the detection direction F is the specific arrangement corresponding to the protruding part 17. Based on this determination result, the image processing unit 5 removes the combination of the dark part 27 and the bright part 37 arranged with the specific arrangement from the difference image Id for the reason that the combination forms the image of the protruding part 17.

As a result of the foregoing, as illustrated in FIG. 6, among the dark parts 21 to 27 and the bright parts 31 to 37, the dark parts 21 to 23 and 27 and the bright parts 31 to 33 and 37 corresponding to the protruding part 17 as the scale have been removed, whereas the dark parts 24 to 26 and the bright parts 34 to 36 have been left. The remainder of the dark parts 24 to 26 and the bright parts 34 to 36 will be images to be subjected to the processing to detect surface defects at Step S105 illustrated in FIG. 5.

As described above, in the processing to remove the protruding part image at Step S104, the image processing unit 5 performs the determination processing on the combination of the dark part 21 and the bright part 31, the combination of the dark part 22 and the bright part 32, and the combination of the dark part 23 and the bright part 33 successively one by one in order of the detection direction F to remove them. Consequently, the image processing unit 5 can determine the arrangement with the correct combinations of the dark parts 21 to 23 and the bright parts 31 to 33 corresponding to the protruding part 17 without determining with a false combination that the bright part 31 and the dark part 22, which are next to each other, are assumed to be one combination and without determining with a false combination that the bright part 32 and the dark part 23, which are next to each other, are assumed to be one combination among the dark parts 21 to 23 and the bright parts 31 to 33 arranged in the detection direction F. With this determination, the image processing unit 5 can correctly leave bright parts and dark parts other than the bright part and the dark part that are combined for the protruding part image, that is, candidate bright parts and candidate dark parts that form the image of the recessed part 15 as the surface defect, in the difference image Id.

(Shape Feature Amount of Surface Defect)

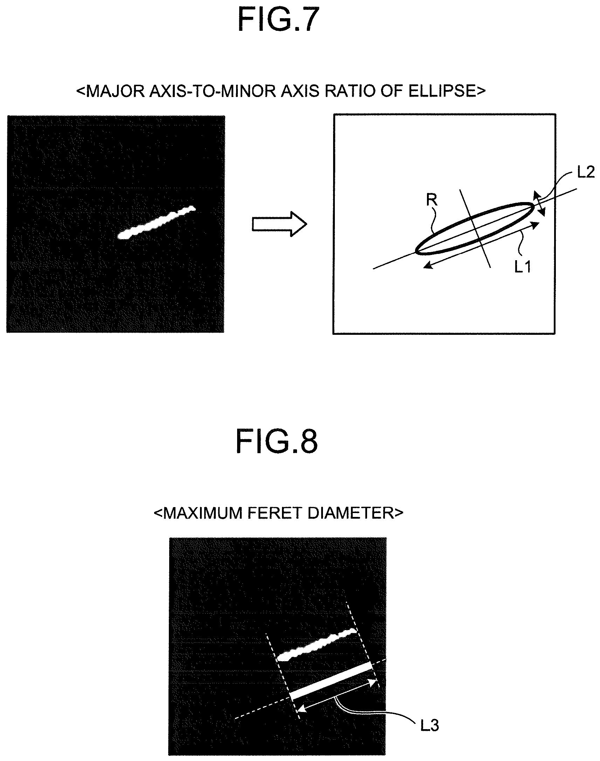

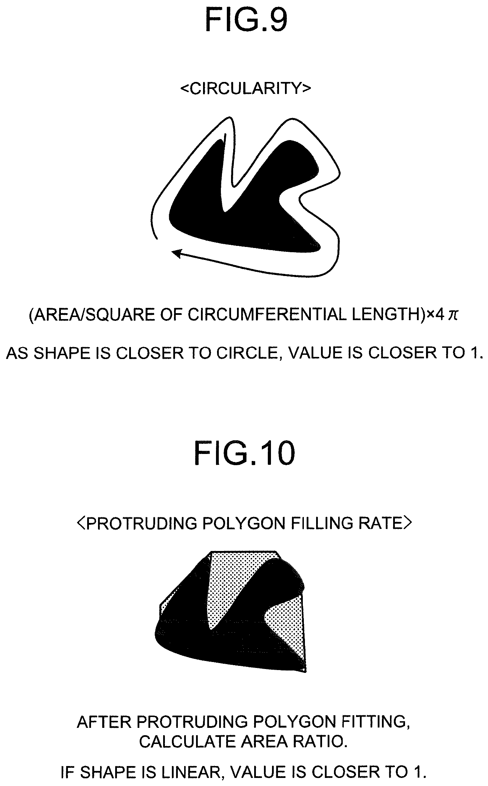

The following specifically describes the shape feature amount of the surface defect, that is, the shape feature amount of the recessed part 15 detected as the surface defect in the embodiment of the present invention. FIG. 7 is a diagram for illustrating an example of the shape feature amount of the surface defect in the embodiment of the present invention. FIG. 8 is a diagram for illustrating another example of the shape feature amount of the surface defect in the embodiment of the present invention. FIG. 9 is a diagram for illustrating circularity as a still another example of the shape feature amount of the surface defect in the embodiment of the present invention. FIG. 10 is a diagram for illustrating a protruding polygon filling rate as a still another example of the shape feature amount of the surface defect in the embodiment of the present invention.

In the embodiment of the present invention, the surface defect of the steel pipe 10 is a part having recessed shape such as a surface flaw. As can be seen by referring to FIGS. 3 and 4, the bright-and-dark pattern of the recessed part 15 as the surface defect is a pattern opposite to that of the protruding part 17 as the safe scale. In other words, in the difference image Id, the image of the recessed part 15 is formed by the combination of the bright part and the dark part arranged in order of brightness and darkness in the detection direction F. Consequently, the image processing unit 5 determines, for the bright parts and the dark parts remaining in the difference image Id after removing the protruding part image, the presence or absence of the combination of the bright part and the dark part arranged in order of brightness and darkness in the detection direction F at Step S105 illustrated in FIG. 5 and can thereby detect the combination of the bright part and the dark part corresponding to the recessed part 15, that is, the surface defect.

However, depending on the shape or the position of the surface defect in the inspection target part 11, the bright-and-dark pattern corresponding to the recessed part 15 is not necessarily formed. Specifically, when the normal vector direction is significantly different from the optical axial direction of the imaging units 3a and 3b on the surface of a steel material (especially the steel pipe 10) and when the shape of the surface defect (the outer shape of the recessed part 15) is slender, either the bright part or the dark part may be hidden from the imaging fields of view of the imaging units 3a and 3b. In this case, only either the bright part or the dark part of the recessed part 15 is detected (imaged) by the imaging units 3a and 3b, and the bright-and-dark pattern of the image of the recessed part 15 is not necessarily formed in the difference image Id.

Given these circumstances, the image processing unit 5 includes logic to detect a slender defect (a slender recessed part 15) by recognizing the shape of the surface defect apart from logic to detect the surface defect by determining and recognizing the arrangement of the bright part and the dark part of the recessed part 15 at Step S105. The slender defect mentioned in this section means a surface defect having a linear, slender shape feature. The image processing unit 5 calculates the shape feature amount of the surface defect as an indicator of slenderness for the bright part and the dark part of the recessed part 15 as the surface defect remaining in the difference image Id after removing the protruding part image and detects the slender defect based on the calculated shape feature amount of the surface defect.

Examples of the shape feature amount of the surface defect as the indicator of slenderness include the major axis-to-minor axis ratio of an ellipse, the maximum Feret diameter, circularity, and a protruding polygon filling rate. Specifically, when calculating the major axis-to-minor axis ratio as the shape feature amount, as illustrated in FIG. 7, the image processing unit 5 first fits an ellipse R to the remainder of the bright part or the dark part in the difference image Id. Examples of the method for fitting the ellipse R to the image of the bright part or the dark part include the method of least squares and the method of second moment derivation; the method of second moment derivation is more useful considering the calculation time. The image processing unit 5 then calculates the lengths of a major axis L1 and a minor axis L2 of the fit ellipse R and defines the ratio of the calculated major axis L1 to the minor axis L2 as the shape feature amount.

As illustrated in FIG. 8, the Feret diameter means the length L3 of a mapping when the image of the bright part or the dark part is orthogonally projected in a one-dimensional manner. When calculating the maximum Feret diameter as the shape feature amount, the image processing unit 5 first calculates the maximum value of the length of the orthogonal projection as the maximum Feret diameter while rotating the remainder of the bright part or the dark part in the difference image Id by 180 degrees. The image processing unit 5 then defines the ratio of a Feret diameter in a direction orthogonal to the place at which the maximum Feret diameter has been calculated to the maximum Feret diameter as the shape feature amount.

As illustrated in FIG. 9, circularity means a value normalized such that the value obtained by dividing the area of the bright part or the dark part by the square of the circumferential length of the bright part or the dark part is closer to "1" as the shape of the bright part or the dark part is closer to a circle. As illustrated in FIG. 10, the protruding polygon filling rate means the areal ratio of the bright part or the dark part to the area of a polygon circumscribing the bright part or the dark part, and the value thereof is closer to "1" as the bright part or the dark part is more linear. Consequently, if the bright part or the dark part is low in circularity and is high in the protruding polygon filling rate on the other hand, the image processing unit 5 can determine that the shape of the bright part or the dark part is a slender shape.

At Step S105, when detecting the slender defect, the image processing unit 5 can improve the accuracy of detecting the slender defect by considering not only the shape feature amount of the surface defect but also the orientation of the surface defect such as vertically oriented, horizontally oriented, or obliquely oriented. When having calculated the major axis-to-minor axis ratio as the shape feature amount of the surface defect, for example, the image processing unit 5 can check the orientation of the bright part or the dark part of the recessed part 15 as the surface defect by determining a direction in which the major axis is oriented. When having calculated the maximum Feret diameter as the shape feature amount of the surface defect, the image processing unit 5 can check the orientation of the bright part or the dark part of the recessed part 15 as the surface defect by determining the rotation angle of the image of the bright part or the dark part when the maximum Feret diameter has been obtained. Although details are omitted, the image processing unit 5 can check the orientation of the bright part or the dark part of the recessed part 15 as the surface defect also by subjecting the image to a linear filter that enhances a specific direction.

As described above, in the embodiment of the present invention, first illumination light and second illumination light that are distinguishable from each other are each applied to an inspection target part of a surface of a steel material with substantially the same incident angle from directions inclined opposite to each other. A first image of the inspection target part illuminated with first illumination light and a second image of the inspection target part illuminated with second illumination light are each captured. A difference image between the first image and second image is generated. A combination of a bright part and a dark part of a protruding part in the inspection target part is removed from among bright parts and dark parts of the difference image based on an arrangement of a bright part and a dark part in a predetermined direction corresponding to the irradiation direction of the first or second illumination light. The presence or absence of a recessed part in the inspection target part is determined based on a shape feature amount of the remainder of the bright parts and the dark parts after this removal processing or an arrangement of the remainder of the bright parts and the dark parts in the predetermined direction. The recessed part that has been determined to be present is detected as a surface defect of the steel material.

Consequently, the difference processing generating the difference image can remove the image of the safe harmless pattern of the inspection target part to exclude the image of the harmless pattern from an object for the detection of surface defects and can further remove the image of the protruding part as the safe scale, which is not the surface defect, from the difference image with the harmless pattern removed to exclude the bright part and the dark part of the image of the scale from the object for the detection of surface defects. In addition, using the remainder of the bright parts and the dark parts of the difference image with the images of the harmless pattern and the protruding part removed in advance, the presence or absence of the recessed part having various outer shapes can be determined regardless of the shape of the surface defect. Consequently, while reducing noise caused by the bright parts and the dark parts of the harmless pattern and the protruding part as much as possible, the recessed part having various outer shapes such as a slender shape, a circular shape, and a polygonal shape can be detected as the surface defect, and the occurrence of over-detection in which the safe scale as the protruding part is falsely detected as the surface defect can be greatly reduced. Consequently, surface defects of steel materials can be correctly detected regardless of their defect shapes, and scales or harmless patterns and surface defects can be distinguished from each other with high precision. This achievement can prevent nonconforming steel materials (nonconforming steel products and semifinished products) from outflowing in volume and can improve the yield of steel materials.

Although the addition image in the difference processing is first captured followed by the capturing of the subtraction image in the embodiment, this is not limiting; the subtraction image may be first captured followed by the capturing of the addition image. In other words, the imaging unit 3a may capture the two-dimensional image Ia of the inspection target part 11 as the subtraction image, and the imaging unit 3b may capture the two-dimensional image Ib of the inspection target part 11 as the addition image. In this process, the luminance value Id (x, y) of each pixel in the difference image Id may be calculated by subtracting the luminance value Ia (x, y) of each pixel in the two-dimensional image Ia as the subtraction image from the luminance value Ib (x, y) of each pixel in the two-dimensional image Ib as the addition image.

Although the direction of the vector obtained by orthogonally projecting the irradiation direction vector of the irradiation unit 2b onto the inspection target part 11 (that is, an orthogonally projected vector) is the detection direction F in the embodiment, the present invention is not limited to this mode; in the present invention, the detection direction F may be the same as the direction of the orthogonally projected vector corresponding to the irradiation direction vector of the irradiation unit 2b or the same as the direction of the orthogonally projected vector corresponding to the irradiation direction vector of the irradiation unit 2a so long as it is a fixed direction with respect to the difference image Id.

Furthermore, although the specific arrangement of the bright part and the dark part of the protruding part image is the arrangement arranged in order of darkness and brightness in the detection direction F in the embodiment, the present invention is not limited to this mode; in the present invention, the specific arrangement of the bright part and the dark part of the protruding part image may be an arrangement arranged in order of either brightness and darkness or darkness and brightness in the detection direction F so long as it is a pattern opposite to the arrangement of the bright part and the dark part of the recessed part image.

Although the cylindrical steel pipe 10 is exemplified as the steel material as an object to be inspected in the embodiment, the present invention is not limited to this mode; in the present invention, the steel material as the object to be inspected may include steel products such as steel pipes (seamless steel pipes, welded steel pipes, and the like), steel sheets (hot-rolled steel sheets, cold-rolled steel sheets, steel plates, and the like), and section shape steel and semifinished products such as slabs produced in the course of manufacture of the steel products.

The embodiment does not limit the present invention; modes configured by combining the components as appropriate are also included in the present invention. In addition, other embodiments, examples, application techniques, and the like performed by those skilled in the art based on the embodiment are all included in the scope of the present invention. The scope of the invention is defined in the appended claims.

Industrial Applicability

As described above, the surface defect detection apparatus and the surface defect detection method according to the present invention are useful for optical detection of surface defects of steel materials and are especially suitable for a surface defect detection apparatus and a surface defect detection method that can distinguish between scales or harmless patterns and surface defects of steel materials with high precision.

Reference Signs List

1 Surface defect detection apparatus
2a, 2b Irradiation unit
3a, 3b Imaging unit
4 Function generator
5 Image processing unit
5a Differencing device
6 Monitor
10 Steel pipe
11 Inspection target part
12a, 12b Illumination light
15 Recessed part
16 Recessed part image
16a, 18a, 31 to 37 Bright part
16b, 18b, 21 to 27 Dark part
17 Protruding part
18 Protruding part image
F Detection direction
Ia, Ib Two-dimensional image
Id Difference image
R Ellipse
Sa, Sb, S1, S2 Image signal

**Claims**

1.  A surface defect detection apparatus (1) comprising:

    a first irradiation unit (2a) configured to apply illumination light (12a) to an inspection target part (11) of a surface of a steel material (10) from a direction inclined with respect to the inspection target part (11);
    a first imaging unit (3a) configured to capture a first image (Ia) of the inspection target part (11) illuminated with the illumination light (12a) of the first irradiation unit (2a);
    a second irradiation unit (2b) that is distinguishable from the first irradiation unit (2a), and configured to apply illumination light (12b) to the inspection target part (11) from a direction inclined opposite to the first irradiation unit (2a) with respect to the inspection target part (11) at a substantially same incident angle as the first irradiation unit (2a);
    a second imaging unit (3b) configured to capture a second image (Ib) of the inspection target part (11) illuminated with the illumination light (12b) of the second irradiation unit (2b); and
    an image processing unit (5) configured to:

    generate a difference image (Id) between the first image (Ia) and the second image (Ib);
    remove a combination of a bright part (16a, 18a) and a dark part (16b, 18b) of a protruding part (17) in the inspection target part (11) from among bright parts (31-37) and dark parts (21-27) of the difference image (Id) based on an arrangement of the bright parts (31-37) and the dark parts (21-27) in a predetermined direction (F) of the difference image (Id) corresponding to the irradiation direction of the illumination light (12a, 12b) of the first or the second irradiation unit (2b);
    determine presence or absence of a recessed part (15) in the inspection target part (11) based on a shape feature amount as an indicator of slenderness of the remainder of the bright parts (31-37) and the dark parts (21-27) or an arrangement of the remainder of the bright parts (31-37) and the dark parts (21-27) in the predetermined direction (F); and
    detect the recessed part as a surface defect of the steel material (10),
    wherein the image processing unit (5) is configured to determine whether the arrangement of the bright parts (31-37) and the dark parts (21-27) in the predetermined direction (F) of the difference image (Id) is a specific arrangement of the bright parts (31-37) and the dark parts (21-27) of the protruding part (17) based on a separating distance, a degree of similarity in shapes and a degree of similarity in areas between the bright part and the dark part of the difference image (Id), and remove a combination of the bright part and the dark part of the difference image (Id) that has been determined to be the specific arrangement as the combination of the bright part and the dark part of the protruding part (17).

14

2. The surface defect detection apparatus (1) according to claim 1, wherein the image processing unit (5) is configured to remove the combination of the bright part (16a, 18a) and the dark part (16b, 18b) of the protruding part (17) in an order of the predetermined direction (F) of the difference image (Id).

3. A surface defect detection method comprising:

a first capturing step of applying, with a first irradiation unit (2a), illumination light (12a) to an inspection target part (11) of a surface of a steel material (10) from a direction inclined with respect to the inspection target part (11), and capturing a first image (Ia) of the inspection target part (11) illuminated with the illumination light (12a) of the first irradiation unit (2a);

a second capturing step of applying, with a second irradiation unit (2b) that is distinguishable from the first irradiation unit (2a), illumination light (12b) to the inspection target part (11) from a direction inclined opposite to the first irradiation unit (2a) with respect to the inspection target part (11) at a substantially same incident angle as the first irradiation unit (2a), and capturing a second image (Ib) of the inspection target part (11) illuminated with the illumination light (12b) of the second irradiation unit (2b);

a difference image generating step of generating a difference image (Id) between the first image (Ia) and the second image (Ib);

a removing step of removing a combination of a bright part (16a, 18a) and a dark part of a protruding part (17) in the inspection target part (11) from among bright parts (31-37) and dark parts (21-27) of the difference image (Id) based on an arrangement of the bright parts (31-37) and the dark parts (21-27) in a predetermined direction (F) of the difference image (Id) corresponding to the irradiation direction of the illumination light (12a, 12b) of the first or the second irradiation unit (2b); and

a surface defect detecting step of determining presence or absence of a recessed part in the inspection target part (11) based on a shape feature amount as an indicator of slenderness of the remainder of the bright parts (31-37) and dark parts (21-27) after the removing step or an arrangement of the remainder of the bright parts (31-37) and dark parts (21-27) in the predetermined direction (F), and detecting the recessed part as a surface defect of the steel material (10),

wherein the removing step determines whether the arrangement of the bright parts (31-37) and the dark parts (21-27) in the predetermined direction (F) of the difference image (Id) is a specific arrangement of the bright parts (31-37) and the dark parts (21-27) of the protruding part (17) based on a separating distance, a degree of similarity in shapes and a degree of similarity in areas between the bright part and the dark part of the difference image (Id), and removes a combination of the bright part and the dark part of the difference image (Id) that has been determined to be the specific arrangement as the combination of the bright part and the dark part of the protruding part (17).

4. The surface defect detection method according to claim 3, wherein the removing step removes the combination of the bright part (16a, 18a) and the dark part (16b, 18b) of the protruding part (17) in an order of the predetermined direction (F) of the difference image (Id).

**Patentansprüche**

1. Vorrichtung zur Erkennung von Oberflächendefekten (1), umfassend:

eine erste Bestrahlungseinheit (2a), die so konfiguriert ist, dass sie Beleuchtungslicht (12a) aus einer in Bezug auf ein Inspektionszielteil (11) geneigten Richtung auf ein Inspektionszielteil (11) einer Oberfläche eines Stahlmaterials (10) aufbringt;

eine erste Abbildungseinheit (3a), die so konfiguriert ist, dass sie ein erstes Bild (Ia) des Inspektionszielteils (11) aufnimmt, das mit dem Beleuchtungslicht (12a) der ersten Bestrahlungseinheit (2a) beleuchtet wird;

eine zweite Bestrahlungseinheit (2b), die sich von der ersten Bestrahlungseinheit (2a) unterscheidet und so konfiguriert ist, dass sie Beleuchtungslicht (12b) auf den Inspektionszielteil (11) aus einer Richtung aufbringt, die in Bezug auf den Inspektionszielteil (11) der Richtung der ersten Bestrahlungseinheit (2a) gegenüberliegt und mit einem im Wesentlichen gleichen Einfallswinkel geneigt ist;

eine zweite Abbildungseinheit (3b), die so konfiguriert ist, dass sie ein zweites Bild (Ib) des Inspektionszielteils (11) aufnimmt, das mit dem Beleuchtungslicht (12b) der zweiten Bestrahlungseinheit (2b) beleuchtet wird; und eine Bildverarbeitungseinheit (5), konfiguriert zum:

Erzeugen eines Differenzbildes (Id) zwischen dem ersten Bild (Ia) und dem zweiten Bild (Ib);

Entfernen einer Kombination aus einem hellen Teil (16a, 18a) und einem dunklen Teil (16b, 18b) eines vorstehenden Teils (17) im Inspektionszielteil (11) aus den hellen Teilen (31-37) und den dunklen Teilen (21-27) des Differenzbildes (Id) basierend auf einer Anordnung der hellen Teile (31-37) und der dunklen Teile (21-27) in einer vorbestimmten Richtung (F) des Differenzbildes (Id), die der Strahlungsintensität des Beleuchtungslichts (12a, 12b) der ersten oder der zweiten Bestrahlungseinheit (2b) entspricht;

Bestimmen des Vorhandenseins oder Nichtvorhandenseins eines vertieften Teils (15) in dem Inspektionszielteil (11) basierend auf einem Betrag eines Formmerkmals als Indikator für die Schlankheit des Rests der hellen Teile (31-37) und der dunklen Teile (21-27) oder einer Anordnung des Rests der hellen Teile (31-37) und der dunklen Teile (21-27) in der vorgegebenen Richtung (F); und

Erkennen des vertieften Teils als Oberflächendefekt des Stahlmaterials (10), wobei die Bildverarbeitungseinheit (5) konfiguriert ist, um zu bestimmen, ob die Anordnung der hellen Teile (31-37) und der dunklen Teile (21-27) in der vorbestimmten Richtung (F) des Differenzbildes (Id) eine spezifische Anordnung der hellen Teile (31-37) und der dunklen Teile (21-27) des vorstehenden Teils (17) basierend auf einem Trennungsabstand, einem Ähnlichkeitsgrad in Formen und einem Ähnlichkeitsgrad in Bereichen zwischen dem hellen Teil und dem dunklen Teil des Differenzbildes (Id) ist, und Entfernen einer Kombination aus dem hellen Teil und dem dunklen Teil des Differenzbildes (Id), die dazu bestimmt wurde, die spezifische Anordnung wie die Kombination aus dem hellen Teil und dem dunklen Teil des vorstehenden Teils (17) darzustellen.

2. Vorrichtung zur Erkennung von Oberflächendefekten (1) nach Anspruch 1, wobei die Bildverarbeitungseinheit (5) so konfiguriert ist, dass sie die Kombination aus dem hellen Teil (16a, 18a) und dem dunklen Teil (16b, 18b) des vorstehenden Teils (17) in einer vorbestimmten Reihenfolge entlang der Richtung (F) des Differenzbildes (Id) entfernt.

3. Verfahren zur Erkennung von Oberflächendefekten, umfassend:

einen ersten Erfassungsschritt, bei dem Beleuchtungslicht (12a) mit einer ersten Bestrahlungseinheit (2a) aus einer in Bezug auf einen Inspektionszielteil (11) geneigten Richtung auf einen Inspektionszielteil (11) einer Oberfläche eines Stahlmaterials (10) aufgebracht wird, und ein erstes Bild (Ia) des Inspektionszielteils (11) erfasst wird, das mit dem Beleuchtungslicht (12a) der ersten Bestrahlungseinheit (2a) beleuchtet ist;

einen zweiten Erfassungsschritt des Aufbringens von Beleuchtungslicht (12b) auf den Inspektionszielteil (11) mit einer zweiten Bestrahlungseinheit (2b), die von der ersten Bestrahlungseinheit (2a) zu unterscheiden ist, aus einer Richtung, die gegenüber der ersten Bestrahlungseinheit (2a) in Bezug auf den Inspektionszielteil (11) mit einem im Wesentlichen gleichen Einfallswinkel wie die erste Bestrahlungseinheit (2a) geneigt ist, und Erfassen eines zweiten Bildes (Ib) des Inspektionszielteils (11), das mit dem Beleuchtungslicht (12b) der zweiten Bestrahlungseinheit (2b) beleuchtet wird;

einen Differenzbilderzeugungsschritt zur Erzeugung eines Differenzbildes (Id) zwischen dem ersten Bild (Ia) und dem zweiten Bild (Ib);

einen Entfernungsschritt zum Entfernen einer Kombination aus einem hellen Teil (16a, 18a) und eines dunklen Teils eines vorstehenden Teils (17) in dem Inspektionszielteil (11) aus den hellen Teilen (31-37) und den dunklen Teilen (21-27) des Differenzbildes (Id) basierend auf einer Anordnung der hellen Teile (31-37) und der dunklen Teile (21-27) in einer vorbestimmten Richtung (F) des Differenzbildes (Id) entsprechend der Strahlungsintensität des Beleuchtungslichts (12a, 12b) der ersten oder der zweiten Bestrahlungseinheit (2b); und

einen Schritt zum Erkennen von Oberflächendefekten, bei dem das Vorhandensein oder Nichtvorhandensein eines vertieften Teils in dem Inspektionszielteil (11) basierend auf einem Betrag eines Formmerkmals als Indikator für die Schlankheit des Rests der hellen Teile (31-37) und der dunklen Teile (21-27) nach dem Entfernungsschritt oder einer Anordnung des Rests der hellen Teile (31-37) und der dunklen Teile (21-27) in der vorbestimmten Richtung (F) bestimmt wird, und Erkennen des vertieften Teils als Oberflächendefekt des Stahlmaterials (10), wobei der Entfernungsschritt bestimmt, ob die Anordnung der hellen Teile (31-37) und der dunklen Teile (21-27) in der vorbestimmten Richtung (F) des Differenzbildes (Id) eine spezifische Anordnung der hellen Teile (31-37) und der dunklen Teile (21-27) des vorstehenden Teils (17) basierend auf einem Trennungsabstand ist, eines Ähnlichkeitsgrades in den Formen und eines Ähnlichkeitsgrades in den Bereichen zwischen dem hellen Teil und dem dunklen Teil des Differenzbildes (Id), und entfernt eine Kombination des hellen Teils und des dunklen Teils des Differenzbildes (Id), die als die spezifische Anordnung wie die Kombination des hellen Teils und des dunklen Teils des vorstehenden Teils (17) bestimmt wurde.

4. Verfahren zur Erkennung von Oberflächendefekten nach Anspruch 3, wobei der Entfernungsschritt die Kombination aus dem hellen Teil (16a, 18a) und dem dunklen Teil (16b, 18b) des vorstehenden Teils (17) in einer Reihenfolge der vorgegebenen Richtung (F) des Differenzbildes (Id) entfernt.

**Revendications**

1. Appareil (1) de détection de défauts de surface comprenant :

   une première unité d'émission (2a) configurée pour appliquer une lumière d'éclairage (12a) sur une partie cible d'inspection (11) d'une surface d'un matériau en acier (10) à partir d'une direction inclinée par rapport à la partie cible d'inspection (11) ;
   une première unité (3a) de formation d'image configurée pour capturer une première image (Ia) de la partie cible d'inspection (11) éclairée par la lumière d'éclairage (12a) de la première unité d'émission (2a) ;
   une seconde unité d'émission (2b) qui est différenciable de la première unité d'émission (2a), et configurée pour appliquer une lumière d'éclairage (12b) sur la partie cible d'inspection (11) à partir d'une direction inclinée opposée à la première unité d'émission (2a) par rapport à la partie cible d'inspection (11) à un angle d'incidence sensiblement identique à celui de la première unité d'émission (2a) ;
   une seconde unité (3b) de formation d'image configurée pour capturer une seconde image (Ib) de la partie cible d'inspection (11) éclairée par la lumière d'éclairage (12b) de la seconde unité d'émission (2b) ; et
   une unité (5) de traitement d'image configurée pour :

   générer une image de différence (Id) entre la première image (Ia) et la seconde image (Ib) ;
   éliminer une combinaison d'une partie claire (16a, 18a) et d'une partie sombre (16b, 18b) d'une partie saillante (17) dans la partie cible d'inspection (11) parmi les parties claires (31-37) et les parties sombres (21-27) de l'image de différence (Id) sur la base d'un agencement des parties claires (31-37) et des parties sombres (21-27) dans une direction prédéterminée (F) de l'image de différence (Id) correspondant à la direction d'émission de la lumière d'éclairage (12a, 12b) de la première ou de la seconde unité d'émission (2b) ;
   déterminer la présence ou l'absence d'une partie en retrait (15) dans la partie cible d'inspection (11) sur la base d'une quantité caractéristique de forme comme indicateur de minceur du reste des parties claires (31-37) et des parties sombres (21-27) ou d'un agencement du reste des parties claires (31-37) et des parties sombres (21-27) dans la direction prédéterminée (F) ; et
   détecter la partie en retrait en tant que défaut de surface du matériau en acier (10),
   dans lequel l'unité (5) de traitement d'image est configurée pour déterminer si l'agencement des parties claires (31-37) et des parties sombres (21-27) dans la direction prédéterminée (F) de l'image de différence (Id) est un agencement spécifique des parties claires (31-37) et des parties sombres (21-27) de la partie saillante (17) sur la base d'une distance de séparation, d'un degré de similitude de formes et d'un degré de similitude dans des zones comprises entre la partie claire et la partie sombre de l'image de différence (Id), et éliminer une combinaison de la partie claire et de la partie sombre de l'image de différence (Id) qui a été déterminée comme étant l'agencement spécifique en tant que combinaison de la partie claire et de la partie sombre de la partie saillante (17).

2. Appareil (1) de détection de défauts de surface selon la revendication 1, dans lequel l'unité (5) de traitement d'image est configurée pour éliminer la combinaison de la partie claire (16a, 18a) et de la partie sombre (16b, 18b) de la partie saillante (17) dans un ordre suivant la direction prédéterminée (F) de l'image de différence (Id).

3. Procédé de détection de défauts de surface, comprenant :

   une première étape de capture consistant à appliquer, avec une première unité d'émission (2a), une lumière d'éclairage (12a) sur une partie cible d'inspection (11) d'une surface d'un matériau en acier (10) à partir d'une direction inclinée par rapport à la partie cible d'inspection (11), et capturer une première image (Ia) de la partie cible d'inspection (11) éclairée par la lumière d'éclairage (12a) de la première unité d'émission (2a) ;
   une seconde étape de capture consistant à appliquer, avec une seconde unité d'émission (2b) qui est différenciable de la première unité d'émission (2a), une lumière d'éclairage (12b) sur la partie cible d'inspection (11) à partir d'une direction inclinée opposée à la première unité d'émission (2a) par rapport à la partie cible d'inspection (11) à un angle d'incidence sensiblement identique à celui de la première unité d'émission (2a), et capturer une seconde image (Ib) de la partie cible d'inspection (11) éclairée par la lumière d'éclairage (12b) de la seconde unité d'émission (2b) ;
   une étape de génération d'image de différence consistant à générer une image de différence (Id) entre la première image (Ia) et la seconde image (Ib) ;

une étape d'élimination consistant à éliminer une combinaison d'une partie claire (16a, 18a) et d'une partie sombre d'une partie saillante (17) dans la partie cible d'inspection (11) parmi des parties claires (31-37) et des parties sombres (21-27) de l'image de différence (Id) sur la base d'un agencement des parties claires (31-37) et des parties sombres (21-27) dans une direction prédéterminée (F) de l'image de différence (Id) correspondant à la direction d'émission de la lumière d'éclairage (12a, 12b) de la première ou de la seconde unité d'émission (2b) ; et

une étape de détection de défauts de surface consistant à déterminer la présence ou l'absence d'une partie en retrait dans la partie cible d'inspection (11) sur la base d'une quantité caractéristique de forme comme indicateur de minceur du reste des parties claires (31-37) et des parties sombres (21-27) après l'étape d'élimination ou d'un agencement du reste des parties claires (31-37) et des parties sombres (21-27) dans la direction prédéterminée (F), et détecter la partie en retrait en tant que défaut de surface du matériau en acier (10),

dans lequel l'étape d'élimination détermine si l'agencement des parties claires (31-37) et des parties sombres (21-27) dans la direction prédéterminée (F) de l'image de différence (Id) est un agencement spécifique des parties claires (31-37) et des parties sombres (21-27) de la partie saillante (17) sur la base d'une distance de séparation, d'un degré de similitude de formes et d'un degré de similitude dans des zones comprises entre la partie claire et la partie sombre de l'image de différence (Id), et élimine une combinaison de la partie claire et de la partie sombre de l'image de différence (Id) qui a été déterminée comme étant l'agencement spécifique en tant que combinaison de la partie claire et de la partie sombre de la partie saillante (17).

4.  Procédé de détection de défauts de surface selon la revendication 3, dans lequel l'étape d'élimination élimine la combinaison de la partie claire (16a, 18a) et de la partie sombre (16b, 18b) de la partie saillante (17) dans un ordre suivant la direction prédéterminée (F) de l'image de différence (Id).

# FIG.1

# FIG.2

3b  3a

2b  2a

15

11(10)

Ib

20mm

Ia

Id

−

+

5a

SURFACE
DEFECT
(RECESSED
PART)

HARMLESS PATTERN

# FIG.3

# FIG.4

# FIG.5

START

| CAPTURE ADDITION IMAGE OF INSPECTION TARGET PART OF STEEL MATERIAL | S101 |

| CAPTURE SUBTRACTION IMAGE OF INSPECTION TARGET PART OF STEEL MATERIAL | S102 |

| GENERATE DIFFERENCE IMAGE OF INSPECTION TARGET PART OF STEEL MATERIAL | S103 |

| REMOVE PROTRUDING PART IMAGE OF INSPECTION TARGET PART FROM DIFFERENCE IMAGE | S104 |

| DETECT RECESSED PART PRESENT IN INSPECTION TARGET PART FROM DIFFERENCE IMAGE AFTER REMOVAL OF PROTRUDING PART AS SURFACE DEFECT | S105 |

| DISPLAY DETECTION RESULT OF SURFACE DEFECT | S106 |

END

# FIG.6

# FIG.7

<MAJOR AXIS-TO-MINOR AXIS RATIO OF ELLIPSE>

# FIG.8

<MAXIMUM FERET DIAMETER>

# FIG.9

<CIRCULARITY>

(AREA/SQUARE OF CIRCUMFERENTIAL LENGTH)×4 $\pi$

AS SHAPE IS CLOSER TO CIRCLE, VALUE IS CLOSER TO 1.

# FIG.10

<PROTRUDING POLYGON FILLING RATE>

AFTER PROTRUDING POLYGON FITTING,
CALCULATE AREA RATIO.

IF SHAPE IS LINEAR, VALUE IS CLOSER TO 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11037949 A
- JP 59052735 A
- JP H04294204 A
- US 6166393 A
- EP 2088874 A1